# EUROPEAN PATENT SPECIFICATION

(11) **EP 3 413 612 B1**
(45) Date of publication and mention of the grant of the patent: **05.02.2020**
(21) Application number: 16889415.2
(22) Date of filing: 12.12.2016
(51) Int. Cl.: H04W 24/10, H04W 48/16, H04W 72/04, H04W 84/12

(54) **COMMUNICATION APPARATUS, BASE STATION APPARATUS, CONTROL METHOD, AND PROGRAM**
KOMMUNIKATIONSVORRICHTUNG, BASISSTATIONSVORRICHTUNG, STEUERUNGSVERFAHREN UND PROGRAMM
DISPOSITIF DE COMMUNICATION, DISPOSITIF DE STATION DE BASE, PROCÉDÉ ET PROGRAMME DE COMMANDE

(30) Priority: 01.02.2016 JP 2016017431
(43) Date of publication of application: 12.12.2018
(73) Proprietor: KDDI Corporation, Tokyo 163-8003 (JP)
(72) Inventor: MORIWAKI, Kazuya, Fujimino-shi Saitama 356-8502 (JP); PENG, Hailan, Fujimino-shi Saitama 356-8502 (JP); SUEGARA, Yasuhiro, Fujimino-shi Saitama 356-8502 (JP)
(74) Representative: Pitchford, James Edward
(86) International application number: PCT/JP2016/086874
(87) International publication number: WO 2017/134932

(56) References cited:
- WO-A1-2014/112563
- WO-A1-2014/165832
- WO-A1-2014/181830
- WO-A1-2015/016138
- WO-A1-2015/016138
- HUAWEI ET AL: "WLAN link monitoring and failure report for LTE-WLAN aggregation and interworking enhancement", 3GPP DRAFT; R2-153557 WLAN LINK MONITORING AND FAILURE REPORT FOR LWA AND INTERWORKING ENHANCEMENT, 3RD GENERATION PARTNERSHIP PROJECT (3GPP), MOBILE COMPETENCE CENTRE ; 650, ROUTE DES LUCIOLES ; F-06 , vol. RAN WG2, no. Beijing, China; 20150824 - 20150828 23 August 2015 (2015-08-23), XP051004260, Retrieved from the Internet: URL:http://www.3gpp.org/ftp/Meetings_3GPP_ SYNC/RAN2/Docs/ [retrieved on 2015-08-23]
- NOKIA NETWORKS: "WLAN Status Indication for LWA and LWI", 3GPP DRAFT; R2-154255 WLAN STATUS INDICATION V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Malmo, Sweden; 20151005 - 20151009 4 October 2015 (2015-10-04), XP051004814, Retrieved from the Internet: URL:http://www.3gpp.org/ftp/Meetings_3GPP_ SYNC/RAN2/Docs/ [retrieved on 2015-10-04]
- SAMSUNG: 'UE behaviours of different UE and Network conditions in LTE-WLAN integrated Network Environment' 3GPP TSG-RAN WG2#91 R2-153150 28 August 2015, XP051040194
- QUALCOMM INC: 'Discussion on System aspects in LTE-WLAN RAN Level Integration' 3GPP TSG-SA WG2#112 S2-153978 20 November 2015, XP051014059
- QUALCOMM INCORPORATED ET AL.: 'Control Plane Architecture for LTE-WLAN Aggregation' 3GPP TSG-RAN WG2#90 R2-152738 29 May 2015, XP050972952
- ERICSSON: 'UE capabilities for LTE-WLAN interworking and aggregation' 3GPP TSG-RAN WG2#92 R2-156606 20 November 2015, XP051005980

## Description

### TECHNICAL FIELD

The present invention relates to a communication apparatus, a base station apparatus, a control method, and a program and, more particularly, to a connection control technique in a wireless communication system where different types of wireless communication techniques coexist.

### BACKGROUND ART

At present, in order to improve a system capacity and throughput in a future wireless access network, a method of using an LTE (Long Term Evolution) and a wireless LAN (WLAN) in cooperation with each other is examined (see NPL 1). Such a method of performing communication by making the LTE and the wireless LAN cooperate with each other will be referred to as an LTE-WLAN Aggregation (LWA). In the LWA, a terminal apparatus performs communication in connection with an access point (AP) on a WLAN side under the control of a base station apparatus (eNB) on an LTE side (in accordance with an instruction by the eNB). Note that the eNB of the LTE instructs the terminal apparatus to search for APs existing on the periphery and in accordance with the instruction, the terminal apparatus searches for the surrounding APs and notifies the eNB of a measurement result such as a received signal strength for each AP. Then, upon receiving a connection instruction transmitted from the eNB in accordance with the notification, the terminal apparatus performs connection control with the AP in accordance with the instruction.

### CITATION LIST

### NON PATENT LITERATURE

NPL 1: Intel et al., RP-150510, "LTE-WLAN Radio Level Integration and Interworking Enhancement", 3GPP, March 2015

Further background art is provided in a paper by Huawei et al. entitled "WLAN link monitoring and failure report for LTE-WLAN aggregation and interworking enhancement" (3GPP TSG-RAN WG2 Meeting #91, R2-153557, Beijing, China, August 2015), which discusses the reporting of WLAN failure for both LTE WLAN aggregation and interworking enhancement.

### SUMMARY OF INVENTION

### TECHNICAL PROBLEM

A terminal apparatus can disable a wireless LAN function easily by, for example, a user operation even if the apparatus itself is compatible with an LWA. Even the LWA-compatible terminal apparatus may be connected to an AP incompatible with the LWA selected by a user. That is, even if the terminal apparatus has a function compatible with the LWA as a function, it may be in a state in which it is incapable of using the function in practice. In this case, the terminal apparatus is not in a state in which it is capable of performing communication in the LWA even if it receives an instruction from an eNB of an LTE, resulting in not following an AP search instruction by the eNB even if it receives the instruction. However, the eNB continues to issue the AP search instruction to the terminal apparatus compatible with the LWA assuming that the terminal apparatus is in the state in which it is capable of performing communication in the LWA, wasting a wireless resource.

Note that the above-described problem has been discussed concerning a relationship between the LTE and the wireless LAN. However, the present invention is not limited to this. That is, the same problem may occur in a system in which the terminal apparatus communicates with the first partner apparatus in the arbitrary first wireless communication system, and the terminal apparatus searches for a partner apparatus by an instruction from the first partner apparatus in the arbitrary second wireless communication system.

In the present invention, an apparatus that performs communication control determines whether a communication apparatus capable of performing communications cooperating with each other in a plurality of wireless communication systems is in a state in which it is capable of performing the communications cooperating with each other.

### SOLUTION TO PROBLEM

The present invention provides a base station apparatus, eNB, as defined in Claim 1 of the appended claims. Also provided is a control method as defined in Claim 7 and a program as defined in Claim 8.

### ADVANTAGEOUS EFFECTS OF INVENTION

According to the present invention, it becomes possible for an apparatus that performs communication control to determine whether a communication apparatus capable of performing communications cooperating with each other in a plurality of wireless communication systems is in a state in which it is capable of performing the communications cooperating with each other.

Other features and advantages of the present invention will be apparent from the following descriptions taken in conjunction with the accompanying drawings, in which like reference characters designate the same or similar parts throughout the figures thereof.

### BRIEF DESCRIPTION OF DRAWINGS

The accompanying drawings, which are incorporated in and constitute a part of the specification, illustrate embodiments of the invention and, together with the description, serve to explain the principles of the invention.
Fig. 1 is a view showing an example of the arrangement of a wireless communication system;
Fig. 2 is a diagram showing an example of the hardware arrangement of each apparatus;
Fig. 3 is a block diagram showing an example of the functional arrangement of a terminal apparatus;
Fig. 4 is a block diagram showing the functional arrangement of an eNB;
Fig. 5 is a sequence chart showing an example of the procedure of processing performed in the wireless communication system; and
Fig. 6 is a sequence chart showing a processing procedure until the eNB instructs the terminal apparatus to search for an AP.

### DESCRIPTION OF EMBODIMENTS

An embodiment of the present invention will be described below in detail with reference to the accompanying drawings.

### (Wireless Communication System)

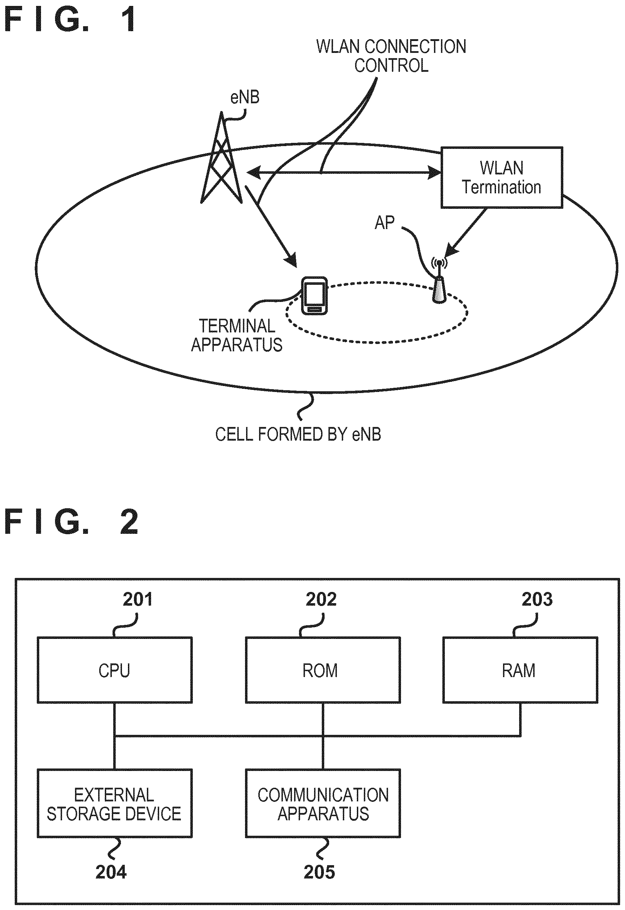

Fig. 1 shows an example of the arrangement of a wireless communication system according to this embodiment. This wireless communication system includes, for example, a base station apparatus (eNB) of an LTE (Long Term Evolution), an access point (AP) of a wireless LAN, and a terminal apparatus. Note that the base station apparatus may be, for example, a base station apparatus of another wireless communication standard such as a portable phone of a generation before the LTE, and the AP may also be a communication apparatus complying with any wireless communication standard. Note that the wireless LAN (WLAN) may use a frequency band of, for example, 2.4 GHz, 5.2 GHz, 5.3 GHz, or 5.6 GHz, or may use, for example, a millimeter wave band or submillimeter wave band of 60 GHz-band or the like. However, the base station apparatus and the AP follow different wireless communication methods, and perform, with the terminal apparatus, the first wireless communication and the second wireless communication different from the first wireless communication, respectively. Note that in the example of Fig. 1, one base station apparatus, one access point, and one terminal apparatus are shown. However, the present invention is not limited to this, and the arbitrary number of base station apparatuses, access points, and terminal apparatuses can exist. In addition, as shown in Fig. 1, a WLAN Termination (WT) may be arranged between the base station apparatus and the AP, and one or more APs can be connected to the WT. Note that "connection" between the WT and the AP indicates that at least they are logically associated with each other. That is, the WT and the AP may physically be connected directly or may be connected indirectly via some node or the like. However, it is described here that the WT and the AP are connected assuming that they are logically associated with each other. Note that the terminal apparatus can also be connected in parallel with not only one AP but also two or more APs (for example, time-divisionally) and can further be connected to a terminal apparatus of another wireless LAN.

In a description below, a terminal apparatus connected to a cellular base station apparatus (an eNB of the LTE) as the first partner apparatus can establish connection in the LWA by using an AP of the wireless LAN as the second partner apparatus. However, the present invention is not limited to this. That is, the following discussion can be applied to a system in which the terminal apparatus is connected to the first communication apparatus of the arbitrary first wireless communication system that leads communication control and can be connected to the second communication apparatus in the arbitrary second wireless communication system under the control by the first communication apparatus.

As described above, the terminal apparatus may be in a state in which it is incapable of performing communication in the LWA in practice, for example, in a case in which it disables a wireless LAN communication function, a case in which it is connected to an AP incompatible with the LWA, or the like even if the apparatus itself has a function of complying with the LWA. Then, in this case, the eNB may continue to give an AP search instruction which is not performed by the terminal apparatus in practice.

To prevent this, the terminal apparatus compatible with the LWA of this embodiment transmits, to a partner apparatus (eNB), information for allowing the eNB to determine whether the terminal apparatus itself is in a state in which it is capable of executing the LWA. Then, based on the information, the eNB determines whether the terminal apparatus can execute the LWA. The eNB instructs the terminal apparatus in the state in which it is capable of executing the LWA to search for the AP while it does not instruct the terminal apparatus which is not in the state in which it is capable of executing the LWA to search for the AP. Generally speaking, the terminal apparatus has a function capable of performing parallel communications in a plurality of wireless communication systems but can be in a state in which it is incapable of performing the wireless communications in practice at that time, and thus transmits, to a partner apparatus that controls the communications, information for the partner apparatus to determine the state. Note that connection with the partner apparatus in the first wireless communication system is established, and the execution of the parallel communications is determined by a state in the second wireless communication system other than the first wireless communication system. Then, the partner apparatus determines the state of the terminal apparatus based on the information and avoids giving an instruction to search for a connection destination apparatus in the second wireless communication system if the terminal apparatus is in the state in which it is incapable of performing the parallel communications in practice. This makes it possible to prevent the partner apparatus (eNB) from continuing to give an instruction to search for the connection destination apparatus (AP), the search being not performed by the terminal apparatus in practice. As a result, it is possible to prevent the waste of a wireless resource.

Note that information transmitted by the terminal apparatus to allow the eNB to determine whether the terminal apparatus is in the state in which it is capable of executing the LWA can include, for example, information indicating a state in which the terminal apparatus disables a wireless LAN function. The eNB can determine that the terminal apparatus is in the state in which it is incapable of executing the LWA if received information includes the information indicating the state in which the terminal apparatus disables the wireless LAN function.

Information for allowing the eNB to determine whether the terminal apparatus is in the state in which it is capable of executing the LWA can include information indicating that the terminal apparatus is connected to the AP of the wireless LAN regardless of control of the eNB. In this case, the information for allowing the eNB to determine whether the terminal apparatus is in the state in which it is capable of executing the LWA can include information specifying an AP to which the terminal apparatus is currently connected. Note that if received information includes information indicating the state in which the terminal apparatus is connected to the AP of the wireless LAN regardless of the control of the eNB, the eNB then determines whether the AP of a connection destination is compatible with the LWA. Then, if the AP of the connection destination is compatible with the LWA, the eNB can transmit an instruction to search for the AP to the terminal apparatus and start a process for the terminal apparatus to perform communication in the LWA with the eNB and the currently connected AP. That is, in this case, the eNB can determine that the terminal apparatus is in the state in which it is capable of executing the LWA. On the other hand, if the eNB determines that the AP of the connection destination is not compatible with the LWA, it can determine that the terminal apparatus is not currently in the state in which it is capable of executing the LWA. In this case, the eNB does not transmit a search instruction.

The information for allowing the eNB to determine whether the terminal apparatus is in the state in which it is capable of executing the LWA can include information explicitly indicating that the terminal apparatus is in the state in which it is capable of executing the LWA (or a state allowing communication in the LWA). In this case, the terminal apparatus can execute the LWA, and thus the eNB transmits the AP search instruction to the terminal apparatus. Note that information transmitted from the terminal apparatus to the eNB may be any information as long as it allows the eNB to determine whether the terminal apparatus is in the state in which it is capable of executing the LWA, and information other than the above-described information may be used.

Note that the information for allowing the eNB to determine whether the terminal apparatus is in the state in which it is capable of executing the LWA can be transmitted from the terminal apparatus to the eNB, for example, each time an LWA execution state of the terminal apparatus changes. This allows the eNB to know the state of the terminal apparatus in real time, making it possible to perform fine control. The terminal apparatus may transmit, to the eNB, this information including at least one of a signal to request RRCConnection establishment from the eNB and a response signal to a signal transmitted from the eNB to set the terminal apparatus in a state in which it establishes RRCConnection with the eNB in RRCConnection establishment processing with the eNB. This allows the eNB to determine the state of the terminal apparatus without defining a new message.

The arrangements of the terminal apparatus and eNB that perform such processing, and the procedure of processing performed by the terminal apparatus and eNB will be described below in detail.

### (Hardware Arrangement)

Fig. 2 shows an example of the hardware arrangement of each of the terminal apparatus and the eNB. In an example, each of the terminal apparatus and the eNB has the hardware arrangement as shown in Fig. 2 and includes, for example, a CPU 201, a ROM 202, a RAM 203, an external storage device 204, and a communication apparatus 205. In each of the terminal apparatus and the eNB, the CPU 201 executes, for example, a program that implements each function of each apparatus as described above and is stored in one of the ROM 202, the RAM 203, and the external storage device 204.

Then, each of the terminal apparatus and the eNB performs communication with another apparatus by, for example, controlling the communication apparatus 205 by the CPU 201. Note that the communication apparatus 205 of the eNB can communicate with the terminal apparatus by, for example, a cellular wireless communication interface such as a wireless interface of the LTE, and also communicate with another base station or WT (or AP) via a wired or wireless communication interface. The communication apparatus 205 of the terminal apparatus can perform communication with the eNB and the AP of the wireless LAN. Note that in the arrangement of Fig. 2, a schematic diagram in which each of the terminal apparatus and the eNB includes one communication apparatus 205 is shown. However, the present invention is not limited to this. For example, the eNB can include the first communication apparatus for communication with the WT (AP) and the second communication apparatus with the terminal apparatus. The terminal apparatus includes, for example, a cellular communication apparatus and a wireless LAN communication apparatus.

Note that each of the terminal apparatus and the eNB may include dedicated hardware for executing respective functions, or may execute some of the functions by hardware and execute the other functions by a computer that operates programs. Alternatively, all the functions may be executed by the computer and the programs.

### (Functional Arrangement of Terminal Apparatus)

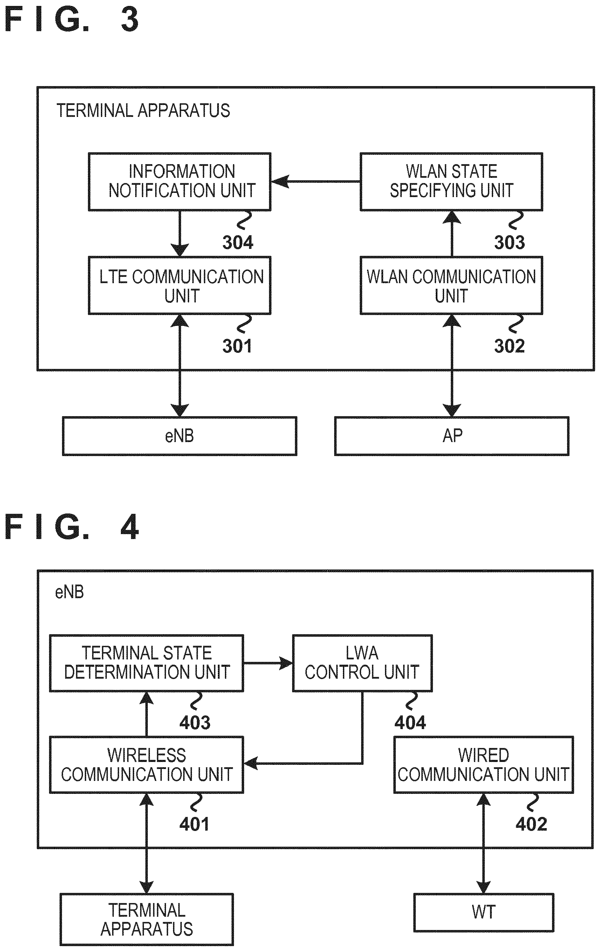

Fig. 3 shows an example of the functional arrangement of the terminal apparatus. The terminal apparatus includes, as an example, an LTE communication unit 301, a WLAN communication unit 302, a WLAN state specifying unit 303, and an information notification unit 304. The LTE communication unit 301 is a functional unit that performs wireless communication by the LTE, and communication with the eNB is performed via the LTE communication unit 301. The WLAN communication unit 302 is a functional unit that performs wireless communication by the wireless LAN, and communication with the AP is performed via the WLAN communication unit 302.

The WLAN state specifying unit 303 specifies, for example, by monitoring the WLAN communication unit 302, the state of a wireless LAN communication function such as whether a communication function by the wireless LAN is disabled or whether connection to, for example, an AP selected by the user is made regardless of control by the eNB. Note that if the WLAN state specifying unit 303 specifies that the WLAN communication unit 302 establishes connection of the wireless LAN regardless of control by the eNB, it can further obtain information specifying an AP of the connection destination. Note that the information specifying the AP can be one of, for example, an SSID (Service Set IDentifier), an HESSID (Homogeneous Extended SSID), and a BSSID (Basic SSID). Note that the WLAN state specifying unit 303 can specify an LWA enabled state if the WLAN communication unit 302 does not disable its function and does not establish connection by the wireless LAN. The information notification unit 304 controls the LTE communication unit 301 to transmit information indicating the state specified by the WLAN state specifying unit 303 to the eNB.

### (Functional Arrangement of eNB)

Fig. 4 shows an example of the functional arrangement of the eNB. The eNB includes, as an example, a wireless communication unit 401, a wired communication unit 402, a terminal state determination unit 403, and an LWA control unit 404. The wireless communication unit 401 performs LTE communication with the terminal apparatus. The wired communication unit 402 performs, for example, communication for controlling wireless LAN communication, and communication of data, which is transmitted/received between the terminal apparatus and an AP, with, for example, a WT or an AP connected to the WT via the WT. Note that the eNB can also perform, for example, communication with the WT or the AP by wireless communication. In this case, the wireless communication unit 401 may be used for communication with the WT or the AP by omitting the wired communication unit 402, or the wired communication unit 402 may be replaced by the second wireless communication unit.

In accordance with a signal received from the terminal apparatus, the terminal state determination unit 403 determines whether the terminal apparatus is in the state in which it is capable of performing communication in the LWA. For example, the terminal state determination unit 403 determines that the terminal apparatus is in the state in which it is capable of performing communication in the LWA if it receives, from the terminal apparatus, information indicating the state in which it is capable of performing communication in the LWA. The terminal state determination unit 403 determines that the terminal apparatus is not in the state in which it is capable of performing communication in the LWA if it receives, from the terminal apparatus, information indicating that the wireless LAN communication function is disabled. Furthermore, if the terminal state determination unit 403 receives, from the terminal apparatus, information indicating that the terminal apparatus establishes connection with a surrounding AP by the wireless LAN regardless of control by the eNB, it then determines whether the currently connected AP is compatible with the LWA. Note that information specifying the currently connected AP can be received together with the information indicating that the terminal apparatus establishes connection with the surrounding AP by the wireless LAN regardless of the control by the eNB. Note that the information specifying the currently connected AP may be received separately from the information indicating that the terminal apparatus establishes connection with the surrounding AP by the wireless LAN regardless of the control by the eNB. The terminal state determination unit 403 can determine that the terminal apparatus is in the state in which it is capable of executing the LWA if the AP to which the terminal apparatus is currently connected is compatible with the LWA and determine that the terminal apparatus is not in the state in which it is capable of executing the LWA if the AP to which the terminal apparatus is currently connected is not compatible with the LWA

In accordance with a determination result by the terminal state determination unit 403, the LWA control unit 404 decides whether to instruct the terminal apparatus to search for an AP and controls the wireless communication unit 401 in accordance with the decision. For example, upon obtaining a determination result that the terminal apparatus is not in the state in which it is capable of executing the LWA, the LWA control unit 404 controls the wireless communication unit 401 so as not to perform an AP search instruction. If the LWA control unit 404 obtains a determination result that the terminal apparatus does not disable the wireless LAN function and is not connected to the surrounding AP regardless of the control by the eNB, it controls the wireless communication unit 401 so as to perform the AP search instruction. On the other hand, if the LWA control unit 404 obtains a determination result that the terminal apparatus does not disable the wireless LAN function but is connected to a surrounding AP incompatible with the LWA regardless of the control by the eNB, it controls the wireless communication unit 401 so as not to perform the AP search instruction. If the LWA control unit 404 obtains a determination result that the terminal apparatus does not disable the wireless LAN function and is connected to an LWA-compatible AP regardless of the control by the eNB, it controls the wireless communication unit 401 so as to perform an instruction to search for an AP that designates the AP.

Note that based on information other than the information as described above, the terminal state determination unit 403 can determine whether the terminal apparatus is in the state in which it is capable of executing the LWA. Even if a determination in the terminal state determination unit 403 is based on any information, the LWA control unit 404 controls the wireless communication unit 401 so as not to perform the AP search instruction if the determination result that the terminal apparatus is in the state in which it is incapable of performing the communication by the LWA is obtained.

### (Processing Procedure)

Subsequently, the procedure of processing performed by the terminal apparatus and the eNB will be described. Note that in the following description, the eNB knows that the terminal apparatus has a function of performing communication in the LWA by, for example, a notification from the terminal apparatus.

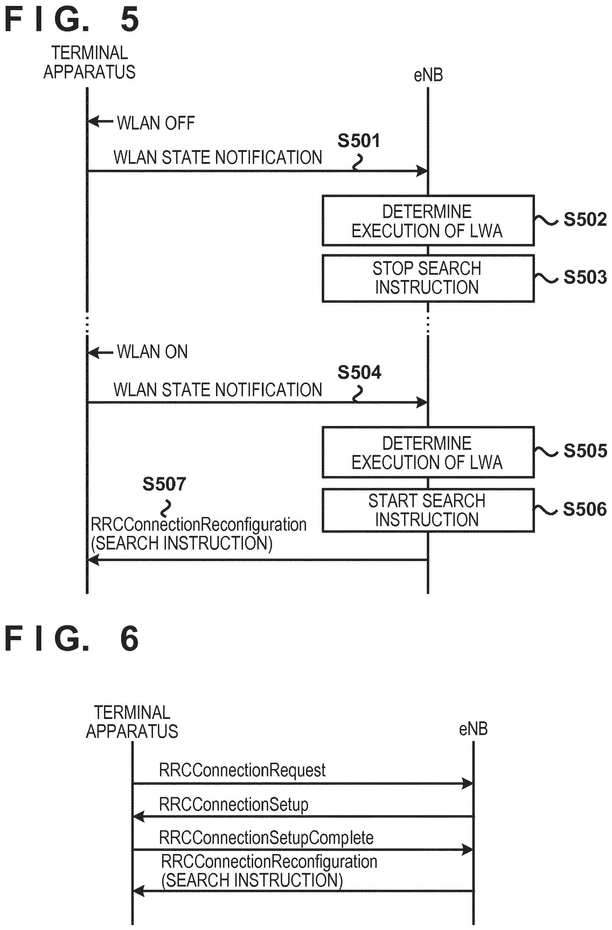

Fig. 5 is a sequence chart showing the procedure of the processing performed by the terminal apparatus and the eNB. Fig. 5 shows an example in a case in which the terminal apparatus shifts between a state in which it is capable of executing the LWA and a state in which it is incapable of executing the LWA by enabling/disabling the wireless LAN communication function, and transmits information concerning the state for the sake of descriptive simplicity. As described above, however, the terminal apparatus may transmit, to the eNB, information indicating any state of the wireless LAN and for allowing the eNB to determine whether the terminal apparatus is in the state in which it is capable of performing communication in the LWA. In this processing example, an example is shown in which the terminal apparatus notifies the eNB of the state of the wireless LAN communication function each time the state changes. However, the present invention is not limited to this. For example, the terminal apparatus may make a notification of the state of the wireless LAN communication function when RRCConnection with the eNB is established, as will be described later.

Note that in this example, if some change occurs in the state of the wireless LAN communication function, the terminal apparatus may notify the eNB of the state even if the change does not influence the execution of the LWA. This is because the eNB determines the execution of the LWA. However, the terminal apparatus may make the notification of the state of the wireless LAN communication function only when the change that occurs in the state influences the execution of the LWA.

In Fig. 5, the terminal apparatus disables the wireless LAN communication function by, for example, a user operation. In accordance with this state change, the terminal apparatus notifies the eNB of the state of the wireless LAN (step S501). Upon receiving this wireless LAN state notification, the eNB determines whether the terminal apparatus can execute the LWA (step S502). In this case, since the terminal apparatus disables the wireless LAN communication function, the eNB determines that the terminal apparatus is in the state in which it is incapable of performing communication in the LWA. Therefore, the eNB does not transmit a search instruction to the terminal apparatus (step S503). For example, if the terminal apparatus enables the wireless LAN communication function till then, and the eNB performs an AP search instruction, the eNB stops transmitting the AP search instruction in response to the notification in step S501.

Subsequently, the terminal apparatus changes the wireless LAN communication function to an enabled state. Then, in accordance with this state change, the terminal apparatus notifies the eNB of the state of the wireless LAN (step S504). At this time, the terminal apparatus can notify the eNB that it is not connected to any AP because the wireless LAN function is disabled until then, and thus it is in the state in which it is capable of performing communication in the LWA. Upon receiving this wireless LAN state notification, the eNB determines whether the terminal apparatus can execute the LWA (step S505). In this case, the eNB receives, from the terminal apparatus, a notification that the terminal apparatus is in the state in which it is capable of performing communication in the LWA, and thus determines that the terminal apparatus is in the state in which it is capable of performing communication in the LWA. Therefore, the eNB starts the search instruction to the terminal apparatus (step S506). Note that the eNB notifies the terminal apparatus of the search instruction by, for example, an RRCConnectionReconfiguration message (step S507). The terminal apparatus thus notifies the eNB of the state of the wireless LAN communication function each time the state changes, allowing the eNB to control the execution/non-execution of the AP search instruction at an appropriate timing.

The example in which the terminal apparatus notifies the eNB of the state of the wireless LAN communication function each time the state changes has been described so far. Subsequently, an example in which the terminal apparatus notifies the eNB of the state of the wireless LAN communication function at the time of establishment of connection with the eNB will be described.

First, a processing procedure until the eNB transmits the AP search instruction to the terminal apparatus will be described with reference to Fig. 6. As shown in Fig. 6, when connection is requested from the terminal apparatus to the eNB, the terminal apparatus transmits an RRCConnectionRequest message to the eNB. Upon receiving this message, the eNB decides whether to accept a request to establish RRCConnection and transmits an RRCConnectionSetup message to the terminal apparatus if it decides to accept the request. Upon receiving the RRCConnectionSetup message, the terminal apparatus shifts to an RRC_Connected state from an RRC_Idle state in LTE communication and transmits an RRCConnectionSetupComplete message to the eNB. That is, the terminal apparatus transmits, to the eNB, the RRCConnectionSetupComplete message as a response signal to a signal transmitted from the eNB in order to set the terminal apparatus in a state connected to the eNB. Upon receiving the RRCConnectionSetupComplete message, the eNB transmits an RRCConnectionReconfiguration message that includes the AP search instruction to the terminal apparatus in order to establish connection in the LWA. Note that the eNB can periodically transmit the RRCConnectionReconfiguration message that includes the AP search instruction to a terminal apparatus in the RRC_Connected state. In accordance with this AP search instruction, the terminal apparatus searches for the AP by the wireless LAN communication function.

In the processing procedure of Fig. 6, the terminal apparatus can make the above-described notification of the state of the wireless LAN communication function by at least one of the RRCConnectionRequest message and the RRCConnectionSetupComplete message. The terminal apparatus can transmit, for example, these messages including information indicating the state of the wireless LAN communication function to the eNB. The eNB receives these messages from the terminal apparatus before establishing RRCConnection with the terminal apparatus and starting the AP search instruction to the terminal apparatus. If the eNB determines, by these messages, that the terminal apparatus is in the state in which it is capable of performing communication in the LWA, it transmits the RRCConnectionReconfiguration message that includes the AP search instruction to the terminal apparatus. On the other hand, if the eNB determines that the terminal apparatus is not in the state in which it is capable of performing communication in the LWA, it does not transmit the RRCConnectionReconfiguration message that includes the AP search instruction. This only requires a change in contents of an existing message, making it possible to prevent the eNB from sending the AP search instruction unnecessarily while keeping an influence on an LTE system small.

Note that the RRCConnectionReconfiguration message that includes the AP search instruction transmitted by the eNB can have information designating an AP to be searched for. Therefore, for example, if the eNB is notified of a state in which the terminal apparatus is connected to an AP designated by the user regardless of control by the eNB, and the AP of a connection destination is compatible with the LWA, the eNB can instruct the terminal apparatus to search for an AP that designates the AP. In accordance with the instruction, the terminal apparatus transmits, to the eNB, a measurement report such as a received signal strength for the currently connected AP. In accordance with the measurement result, the eNB causes the terminal apparatus to establish connection in the LWA with the currently connected AP.

As described above, the terminal apparatus makes a notification of the state of the wireless LAN communication function of itself and in accordance with the notification, the eNB determines whether the terminal apparatus is in the state in which it is capable of executing the LWA. Then, if the terminal apparatus is not in the state in which it is capable of executing the LWA, the eNB avoids instructing the terminal apparatus to search for the AP. This prevents transmission of an unnecessary signal for the AP search instruction. As a result, it is possible to prevent a decrease in utilization efficiency of the wireless resource.

The present invention is not limited to the above-described embodiments, and various changes and modifications can be made within the scope of the present invention as defined in the appended claims.

## Claims

1. A base station apparatus, eNB, belonging to an LTE system in a wireless communication system that includes a communication terminal apparatus capable of performing, under the control of the eNB, communication in connection with an access point, AP, on a wireless LAN, WLAN, side, which is referred to as LTE-WLAN Aggregation, LWA, **characterised by** comprising:
reception means (401) for receiving, from the communication terminal apparatus, information indicating that the WLAN communication function is disabled and information indicating that the terminal apparatus establishes connection with a surrounding AP by the WLAN regardless of control by the eNB;
determination means (403) for determining, based on the information, whether the communication terminal apparatus is in the state in which the communication terminal apparatus is capable of performing the LWA; and
means for not transmitting to the communication terminal apparatus a WLAN AP search instruction if it is determined that the communication terminal apparatus does not disable the WLAN communication function but is connected to a surrounding AP incompatible with the LWA regardless of the control by the eNB, and for transmitting to the communication terminal apparatus a WLAN AP search instruction if it is determined that the communication terminal apparatus does not disable the WLAN communication function and is connected to an LWA-compatible AP regardless of the control by the eNB.

2. The eNB according to claim 1, wherein the information comprises information capable of indicating one of a first state in which the communication terminal apparatus can perform the LWA, a second state in which the WLAN communication function is disabled in the communication terminal apparatus, and a third state in which the communication terminal apparatus is connected to another apparatus in the WLAN regardless of control of the eNB, and
if the information indicates the third state, the information further includes information specifying the other apparatus.

3. The eNB according to claim 2, wherein the determination means (403) is configured to determine that the communication terminal apparatus is in the state in which the communication terminal apparatus is incapable of performing the LWA if the information indicates the second state or if the information indicates the third state and the other apparatus is incapable of the LWA.

4. The eNB according to claim 2 or 3, wherein the determination means (403) is configured to determine that the communication terminal apparatus is in the state in which the communication terminal apparatus is capable of performing the LWA if the information indicates the first state or if the information indicates the third state and the other apparatus is capable of the LWA.

5. The eNB according to any one of claims 1 to 4, wherein the reception means (401) is configured to obtain the information by receiving at least one of a first signal which requests to establish connection with the eNB and a second signal which is a response signal to a signal transmitted by the eNB in order to set the communication terminal apparatus in a state connected to the eNB, the first signal and the second signal being transmitted from the communication terminal apparatus and including the information.

6. The eNB according to any one of claims 1 to 4, wherein the information is received each time the state changes in the communication terminal apparatus.

7. A control method performed by base station apparatus, eNB, belonging to an LTE system in a wireless communication system that includes a communication terminal apparatus capable of performing, under the control of the eNB, communication in connection with an access point, AP, on a wireless LAN, WLAN, side, which is referred to as LTE-WLAN Aggregation, LWA, **characterised by** comprising:
receiving, from the communication terminal apparatus, information indicating that the WLAN communication function is disabled and information indicating that the terminal apparatus establishes connection with a surrounding AP by the WLAN regardless of control by the eNB;
determining, based on the information, whether the communication terminal apparatus is in the state in which the communication terminal apparatus is capable of performing the LWA; and
not transmitting to the communication terminal apparatus a WLAN AP search instruction if it is determined that the communication terminal apparatus does not disable the WLAN communication function but is connected to a surrounding AP incompatible with the LWA regardless of the control by the eNB, and transmitting to the communication terminal apparatus a WLAN AP search instruction if it is determined that the communication terminal apparatus does not disable the WLAN communication function and is connected to an LWA-compatible AP regardless of the control by the eNB.

8. A program for causing a computer included in a base station apparatus, eNB, belonging to an LTE system in a wireless communication system that includes a communication terminal apparatus capable of performing, under the control of the eNB, communication in connection with an access point, AP, on a wireless LAN, WLAN, side, which is referred to as LTE-WLAN Aggregation, LWA, to:
receive, from the communication terminal apparatus, information indicating that the WLAN communication function is disabled and information indicating that the terminal apparatus establishes connection with a surrounding AP by the WLAN regardless of control by the eNB;
determine, based on the information, whether the communication terminal apparatus is in the state in which the communication terminal apparatus is capable of performing the LWA; and
not transmit to the communication terminal apparatus a WLAN AP search instruction if it is determined that the communication terminal apparatus does not disable the WLAN communication function but is connected to a surrounding AP incompatible with the LWA regardless of the control by the eNB, and transmit to the communication terminal apparatus a WLAN AP search instruction if it is determined that the communication terminal apparatus does not disable the WLAN communication function and is connected to an LWA-compatible AP regardless of the control by the eNB.

## Patentansprüche

1. Basisstationsgerät eNB, das zu einem LTE-System in einem drahtlosen Kommunikationssystem gehört, das ein Kommunikationsendgerät beinhaltet, das unter der Steuerung des eNB Kommunikationen in Verbindung mit einem Zugangspunkt AP auf einer Drahtlos-LAN-(WLAN)-Seite durchführen kann, die als LTE-WLAN Aggregation, LWA, bezeichnet wird, **dadurch gekennzeichnet, dass** es Folgendes umfasst:
Empfangsmittel (401) zum Empfangen von Informationen von dem Kommunikationsendgerät, die anzeigen, dass die WLAN-Kommunikationsfunktion gesperrt ist, und von Informationen, die anzeigen, dass das Endgerät eine Verbindung mit einem umgebenden AP durch das WLAN unabhängig von der Steuerung durch das eNB aufbaut;
Feststellungsmittel (403) zum Feststellen, auf der Basis der Informationen, ob das Kommunikationsendgerät in dem Zustand ist, in dem das Kommunikationsendgerät die LWA durchführen kann; und
Mittel zum Nichtsenden eines WLAN-AP-Suchbefehls zum Kommunikationsendgerät, wenn festgestellt wird, dass das Kommunikationsendgerät die WLAN-Kommunikationsfunktion nicht sperrt, sondern mit einem umgebenden AP verbunden ist, der unabhängig von der Steuerung durch das eNB mit der LWA inkompatibel ist, und zum Senden eines WLAN-AP-Suchbefehls zum Kommunikationsendgerät, wenn festgestellt wird, dass das Kommunikationsendgerät die WLAN-Kommunikationsfunktion nicht sperrt und unabhängig von der Steuerung durch das eNB mit einem LWA-kompatiblen AP verbunden ist.

2. eNB nach Anspruch 1, wobei die Informationen Informationen beinhalten, die eines der Folgenden anzeigen können: einen ersten Zustand, in dem das Kommunikationsendgerät die LWA durchführen kann, einen zweiten Zustand, in dem die WLAN-Kommunikationsfunktion im Kommunikationsendgerät gesperrt ist, und einen dritten Zustand, in dem das Kommunikationsendgerät mit einem anderen Gerät im WLAN unabhängig von der Steuerung des eNB verbunden ist, und
wobei die Informationen ferner, wenn sie den dritten Zustand anzeigen, Informationen beinhalten, die das andere Gerät vorgeben.

3. eNB nach Anspruch 2, wobei das Feststellungsmittel (403) konfiguriert ist zum Feststellen, dass das Kommunikationsendgerät in dem Zustand ist, in dem das Kommunikationsendgerät die LWA nicht durchführen kann, wenn die Informationen den zweiten Zustand anzeigen oder wenn die Informationen den dritten Zustand anzeigen und das andere Gerät nicht LWA-fähig ist.

4. eNB nach Anspruch 2 oder 3, wobei das Feststellungsmittel (403) zum Feststellen konfiguriert ist, dass das Kommunikationsendgerät in dem Zustand ist, in dem das Kommunikationsendgerät die LWA durchführen kann, wenn die Informationen den ersten Zustand anzeigen oder wenn die Informationen den dritten Zustand anzeigen und das andere Gerät LWA-fähig ist.

5. eNB nach einem der Ansprüche 1 bis 4, wobei das Empfangsmittel (401) zum Einholen der Informationen durch Empfangen von wenigstens einem aus einem ersten Signal, das den Aufbau einer Verbindung mit dem eNB anfordert, und einem zweiten Signal konfiguriert ist, das ein Antwortsignal auf ein vom eNB gesendetes Signal ist, um das Kommunikationsendgerät in einen mit dem eNB verbundenen Zustand zu setzen, wobei das erste Signal und das zweite Signal vom Kommunikationsendgerät gesendet werden und die Informationen beinhalten.

6. eNB nach einem der Ansprüche 1 bis 4, wobei die Informationen jedes Mal empfangen werden, wenn sich der Zustand im Kommunikationsendgerät ändert.

7. Steuerverfahren, durchgeführt von einem Basisstationsgerät eNB, das zu einem LTE-System in einem drahtlosen Kommunikationssystem gehört, das ein Kommunikationsendgerät beinhaltet, das unter der Steuerung des eNB Kommunikationen in Verbindung mit einem Zugangspunkt AP auf einer Drahtlos-LAN-(WLAN)-Seite durchführen kann, die als LTE-WLAN Aggregation, LWA, bezeichnet wird, **dadurch gekennzeichnet, dass** es Folgendes beinhaltet:
Empfangen von Informationen vom Kommunikationsendgerät, die anzeigen, dass die WLAN-Kommunikationsfunktion gesperrt ist, und von Informationen, die anzeigen, dass das Endgerät eine Verbindung mit einem umgebenden AP durch das WLAN unabhängig von der Steuerung durch das eNB aufbaut;
Feststellen, auf der Basis der Informationen, ob das Kommunikationsendgerät in dem Zustand ist, in dem das Kommunikationsendgerät die LWA durchführen kann; und
Nichtsenden eines WLAN-AP-Suchbefehls zum Kommunikationsendgerät, wenn festgestellt wird, dass das Kommunikationsendgerät die WLAN-Kommunikationsfunktion nicht sperrt, sondern mit einem umgebenden AP verbunden ist, der unabhängig von der Steuerung durch das eNB mit der LWA inkompatibel ist, und Senden eines WLAN-AP-Suchbefehls zum Kommunikationsendgerät, wenn festgestellt wird, dass das Kommunikationsendgerät die WLAN-Kommunikationsfunktion nicht sperrt und unabhängig von der Steuerung durch das eNB mit einem LWA-kompatiblen AP verbunden ist.

8. Programm zum Bewirken, dass ein in einem Basisstationsgerät eNB enthaltener Computer, der zu einem LTE-System in einem drahtlosen Kommunikationssystem gehört, das ein Kommunikationsendgerät beinhaltet, das unter der Steuerung des eNB Kommunikationen in Verbindung mit einem Zugangspunkt AP auf einer Drahtlos-LAN-(WLAN)-Seite durchführen kann, die als LTE-WLAN Aggregation, LWA, bezeichnet wird:
Informationen von dem Kommunikationsendgerät empfängt, die anzeigen, dass die WLAN-Kommunikationsfunktion gesperrt ist, und Informationen, die anzeigen, dass das Endgerät eine Verbindung mit einem umgebenden AP durch das WLAN unabhängig von der Steuerung durch das eNB aufbaut;
Feststellen, auf der Basis der Informationen, ob das Kommunikationsendgerät in dem Zustand ist, in dem das Kommunikationsendgerät die LWA durchführen kann; und
Nichtsenden eines WLAN-AP-Suchbefehls zum Kommunikationsendgerät, wenn festgestellt wird, dass das Kommunikationsendgerät die WLAN-Kommunikationsfunktion nicht sperrt, sondern mit einem umgebenden AP verbunden ist, der mit der LWA unabhängig von der Steuerung durch das eNB inkompatibel ist, und Senden eines WLAN-AP-Suchbefehls zum Kommunikationsendgerät, wenn festgestellt wird, dass das Kommunikationsendgerät die WLAN-Kommunikationsfunktion nicht sperrt und mit einem LWA-kompatiblen AP unabhängig von der Steuerung durch das eNB verbunden ist.

## Revendications

1. Appareil station de base (eNB) appartenant à un système LTE dans un système de communication sans fil qui comprend un appareil terminal de communication capable de réaliser, sous le contrôle de l'eNB, une communication en connexion avec un point d'accès (AP) d'un côté LAN sans fil (WLAN), désignée agrégation LTE-WLAN (LWA), l'appareil station de base (eNB) étant **caractérisé en ce qu'**il comprend :
un moyen de réception (401) permettant de recevoir, en provenance de l'appareil terminal de communication, des informations indiquant que la fonction de communication WLAN est désactivée et des informations indiquant que l'appareil terminal établit une connexion avec un AP circonvoisin par le WLAN indépendamment d'un contrôle par l'eNB ;
un moyen de détermination (403) permettant de déterminer, sur la base des informations, si l'appareil terminal de communication est dans l'état dans lequel l'appareil terminal de communication est capable de réaliser la LWA ; et
un moyen permettant de ne pas transmettre à l'appareil terminal de communication une instruction de recherche d'AP WLAN s'il est déterminé que l'appareil terminal de communication ne désactive pas la fonction de communication WLAN mais est connecté à un AP circonvoisin incompatible avec la LWA indépendamment du contrôle par l'eNB, et permettant de transmettre à l'appareil terminal de communication une instruction de recherche d'AP WLAN s'il est déterminé que l'appareil terminal de communication ne désactive pas la fonction de communication WLAN et est connecté à un AP compatible avec la LWA indépendamment du contrôle par l'eNB.

2. ENB selon la revendication 1, dans lequel les informations comprennent des informations capables d'indiquer un état parmi un premier état dans lequel l'appareil terminal de communication peut réaliser la LWA, un deuxième état dans lequel la fonction de communication WLAN est désactivée dans l'appareil terminal de communication et un troisième état dans lequel l'appareil terminal de communication est connecté à un autre appareil dans le WLAN indépendamment du contrôle de l'eNB, et
si les informations indiquent le troisième état, les informations incluent en outre des informations spécifiant l'autre appareil.

3. ENB selon la revendication 2, dans lequel le moyen de détermination (403) est configuré pour déterminer que l'appareil terminal de communication est dans l'état dans lequel l'appareil terminal de communication est incapable de réaliser la LWA si les informations indiquent le deuxième état ou si les informations indiquent le troisième état et l'autre appareil est incapable de réaliser la LWA.

4. ENB selon la revendication 2 ou 3, dans lequel le moyen de détermination (403) est configuré pour déterminer que l'appareil terminal de communication est dans l'état dans lequel l'appareil terminal de communication est capable de réaliser la LWA si les informations indiquent le premier état ou si les informations indiquent le troisième état et l'autre appareil est capable de réaliser la LWA.

5. ENB selon l'une quelconque des revendications 1 à 4, dans lequel le moyen de réception (401) est configuré pour obtenir les informations en recevant au moins un signal parmi un premier signal qui demande d'établir une connexion avec l'eNB et un second signal qui est un signal de réponse à un signal transmis par l'eNB afin de fixer l'appareil terminal de communication dans un état connecté à l'eNB, le premier signal et le second signal étant transmis depuis l'appareil terminal de communication et incluant les informations.

6. ENB selon l'une quelconque des revendications 1 à 4, dans lequel les informations sont reçues chaque fois que l'état change dans l'appareil terminal de communication.

7. Procédé de contrôle réalisé par un appareil station de base (eNB) appartenant à un système LTE dans un système de communication sans fil qui comprend un appareil terminal de communication capable de réaliser, sous le contrôle de l'eNB, une communication en connexion avec un point d'accès (AP) d'un côté LAN sans fil (WLAN), désignée agrégation LTE-WLAN (LWA), le procédé étant **caractérisé en ce qu'**il consiste à :
recevoir, en provenance de l'appareil terminal de communication, des informations indiquant que la fonction de communication WLAN est désactivée et des informations indiquant que l'appareil terminal établit une connexion avec un AP circonvoisin par le WLAN indépendamment d'un contrôle par l'eNB ;
déterminer, sur la base des informations, si l'appareil terminal de communication est dans l'état dans lequel l'appareil terminal de communication est capable de réaliser la LWA ; et
ne pas transmettre à l'appareil terminal de communication une instruction de recherche d'AP WLAN s'il est déterminé que l'appareil terminal de communication ne désactive pas la fonction de communication WLAN mais est connecté à un AP circonvoisin incompatible avec la LWA indépendamment du contrôle par l'eNB, et transmettre à l'appareil terminal de communication une instruction de recherche d'AP WLAN s'il est déterminé que l'appareil terminal de communication ne désactive pas la fonction de communication WLAN et est connecté à un AP compatible avec la LWA indépendamment du contrôle par l'eNB.

8. Programme pour amener un ordinateur compris dans un appareil station de base (eNB), appartenant à un système LTE dans un système de communication sans fil qui comprend un appareil terminal de communication capable de réaliser, sous le contrôle de l'eNB, une communication en connexion avec un point d'accès (AP) d'un côté LAN sans fil (WLAN), désignée agrégation LTE-WLAN (LWA), à :
recevoir, en provenance de l'appareil terminal de communication, des informations indiquant que la fonction de communication WLAN est désactivée et des informations indiquant que l'appareil terminal établit une connexion avec un AP circonvoisin par le WLAN indépendamment d'un contrôle par l'eNB ;
déterminer, sur la base des informations, si l'appareil terminal de communication est dans l'état dans lequel l'appareil terminal de communication est capable de réaliser la LWA ; et
ne pas transmettre à l'appareil terminal de communication une instruction de recherche d'AP WLAN s'il est déterminé que l'appareil terminal de communication ne désactive pas la fonction de communication WLAN mais est connecté à un AP circonvoisin incompatible avec la LWA indépendamment du contrôle par l'eNB, et transmettre à l'appareil terminal de communication une instruction de recherche d'AP WLAN s'il est déterminé que l'appareil terminal de communication ne désactive pas la fonction de communication WLAN et est connecté à un AP compatible avec la LWA indépendamment du contrôle par l'eNB.
